# EUROPÄISCHE PATENTSCHRIFT

(11) **EP 0 987 165 B1**
(45) Veröffentlichungstag und Bekanntmachung des Hinweises auf die Patenterteilung: **14.12.2005**
(21) Anmeldenummer: 99107065.7
(22) Anmeldetag: 10.04.1999
(51) Int. Cl.: B62D 15/00

(54) **Automatisches Lenksystem**
Automatic steering system
Système de direction automatique

(30) Priorität: 14.09.1998 DE 19841914
(43) Veröffentlichungstag der Anmeldung: 22.03.2000
(73) Patentinhaber: ROBERT BOSCH GMBH, 70442 Stuttgart (DE)
(72) Erfinder: Lohner, Herbert, 71292 Friolzheim (DE); Dominike, Peter, 74321 Bietigheim-Bissingen (DE); Cao, Chi-Thuan, 70825 Korntal-Muenchingen (DE); Leimbach, Klaus-Dieter, 71696 Moeglingen (DE); Harter, Werner, 75428 Illingen (DE); Hommel, Mathias, 70825 Korntal (DE)

(56) Entgegenhaltungen:
- EP-A- 0 849 144
- DE-A- 3 315 051
- US-A- 5 764 015

## Beschreibung

### Stand der Technik

Die Erfindung geht aus von einem automatischen Lenksystem für Kraftfahrzeuge mit einem elektrisch ansteuerbaren Lenksteller zur Einstellung eines Radlenkwinkels der gelenkten Räder, einem Lenkradwinkelsensor zur Erfassung eines Lenkradwinkels, und einem elektronischen Regel/Steuergerät, das mindestens mit dem Lenksteller und dem Lenkradwinkelsensor verbunden ist, um Stellsignale für den elektrischen Lenksteller zu erzeugen.

Ein derartiges Lenksystem ist aus der DE-OS 40 31 316 bekannt. Bei dem bekannten Lenksystem wird dem Lenkradwinkel ein Zusatzwinkel überlagert, wodurch der Lenkwinkel der Räder unabhängig vom Lenkradwinkel verändert werden kann. Damit werden Vorteile hinsichtlich der Fahrdynamik, Fahrsicherheit und Fahrkomfort erzielt. Die genannte Druckschrift beschreibt keine automatisierte Lenkung des Fahrzeugs über eine bestimmte Wegstrecke, derart daß z.B. beim Rückwärtsfahren kein lenkender Eingriff des Fahrers nötig ist.

Die US 5764015 zeigt ein automatisches Lenksystem für Kraftfahrzeuge mit einem elektrisch ansteuerbaren Lenksteller zur Einstellung eines Radlenkwinkels der gelenkten Räder, einem Lenkradwinkelsensor zur Erfassung eines Lenkradwinkels Weiterhin ist hier ein elektronisches Regel/Steuergerät offenbart das mindestens mit dem Lenksteller und dem Lenkradwinkelsensor verbunden ist, um Stellsignale für den elektrischen Lenksteller zu erzeugen. Hierbei weist das Regel/Steuergerät einen zur Speicherung der Lenkbewegung von einer zuletzt gefahrenen Fahrtstrecke vorgesehenen Speicher auf.

### Aufgaben und Vorteile der Erfindung

Eine Aufgabe der Erfindung besteht darin, ein automatisches Lenksystem für Kraftfahrzeuge zu ermöglichen, mit dem zumindest die Lenkung beim Rückwärts- oder Vorwärtsfahren über eine bestimmte kurze Wegstrecke ohne lenkenden Eingriff des Fahrers automatisiert werden kann.

Zur Lösung dieser Aufgabe weist das erfindungsgemäße automatische Lenksystem für Kraftfahrzeuge außer einem elektrisch ansteuerbaren Lenksteller zur Einstellung eines Radlenkwinkels der gelenkten Räder, einem Lenkradwinkelsensor zur Erfassung eines Lenkradwinkels und einem elektronischen Regel/Steuergerät, das mindestens mit dem Lenksteller und dem Lenkradwinkelsensor verbunden ist, um Stellsignale für den elektrischen Lenksteller zu erzeugen, auch Radsensoren zur Erfassung von Drehrichtung und Drehwinkel der gelenkten Räder auf, und das Regel/Steuergerät hat einen Speicher zur Speicherung der Lenkbewegungen einer zuletzt gefahrenen, von den Radsensoren erfaßten Fahrtstrecke, und ist dazu eingerichtet, die über die zuletzt gefahrene Fahrtstrecke gespeicherten Lenkbewegungen während einer unmittelbar darauffolgenden Fahrt in umgekehrter Fahrtrichtung ortsabhängig zu reproduzieren und die entsprechenden Stellsignale an den Lenksteller auszugeben.

Das Kraftfahrzeug mit dem automatischen Lenksystem fährt automatisch, d.h. ohne lenkenden Eingriff des Fahrers, z.B. aus einer Hofeinfahrt, einem Parkplatz oder einer Garage wieder zurück auf die Straße oder den Garagenvorplatz. Bei der vorwärtsfahrt werden der gefahrene Weg von den Radsensoren und die Lenkbewegungen, beispielsweise über 20 m, im Speicher gespeichert und beim Rückwärtsfahren die Lenkbewegungen über dieselbe Fahrtstrecke ortsabhängig wieder ausgegeben, so daß das Lenksystem das Fahrzeug rückwärts automatisch die gleiche Bahn lenkt, wie es davor in Vorwärtsrichtung fuhr.

Selbstverständlich kann auch umgekehrt vorgegangen werden, so daß der Speicher die Lenkbewegungen einer zuletzt rückwärts gefahrenen Fahrtstrecke, beispielsweise beim Rückwärtseinparken, speichert, und das Lenksystem dann die Lenkbewegung bei einer unmittelbar darauffolgenden Vorwärtsfahrt reproduziert.

Bei der Anwendung des automatischen Lenksystems zur Automatisierung des Rückwärtsfahrens, kann das Regel/Steuergerät die Ausgabe der die Rückwärtsfahrt bestimmenden Lenkstellsignale mit dem Einlegen des Rückwärtsgangs starten.

Es sei erwähnt, daß das automatische Lenksystem in seiner grundlegenden Ausbaustufe die Betätigung der Pedale und der Schaltung durch den Fahrer benötigt. In die Lenkung greift der Fahrer aber nur bei kritischen Situationen, beispielsweise beim Auftauchen eines Hindernisses ein.

Gemäß einer vorteilhaften Weiterbildung wird das erfindungsgemäße Lenksystem auch zur Automatisierung des Fahrbetriebs selbst eingesetzt. Dazu ist das Regel/Steuergerät funktionell mit weiteren Systemen im Fahrzeug verbunden, wie mit der Motorsteuerung, der Bremsensteuerung, der Getriebesteuerung etc., und speichert in dem Speicher außer dem Lenkradwinkel ortsabhängig weiterer Fahrparameter, wie die Geschwindigkeit, den Zustand der Bremsen, den Getriebezustand während der zuletzt gefahrenen Fahrtstrecke. Zur ortsabhängigen Reproduktion liest das Regel/Steuergerät diese gespeicherten Fahrparameter zusammen mit den gespeicherten Lenkbewegungen während einer unmittelbar darauffolgenden Fahrtstrecke in der umgekehrten Fahrtrichtung wieder aus und erzeugt entsprechende Stellsignale für den Lenksteller und für entsprechende Stellglieder der Motorsteuerung, der Bremsensteuerung und Getriebesteuerung usw..

Diese Weiterbildung des erfindungsgemäßen automatischen Lenksystems erfordert grundsätzlich keine Betätigung des Bremspedals, des Gaspedals und des Getriebeschalters seitens des Fahrers mehr.

In weiterer Ausbaustufe des Lenksystems können eine Rückwärtskamera und ein Display vorgesehen sein, und das Regel/Steuergerät weist eine Bildauswertungseinheit auf oder ist mit einer solchen verbunden, die Hindernisse in der rückwärtigen Fahrspur abhängig von von der Rückwärtskamera gelieferten Bildsignalen erkennt. Bei Auftauchen eines Hindernisses während der Rückwärtsfahrt kann das Regel/Steuergerät ein entsprechendes akustisches und/oder optisches Warnsignal für den Fahrer erzeugen und gegebenenfalls das Fahrzeug anhalten.

Mit einer zusätzlichen Bildverarbeitungseinheit in dem Regel/Steuergerät kann das am Display angezeigte Bild der Rückwärtskamera so dargestellt werden, daß die evtl. erforderlichen Lenkeingriffe des Fahrers, bezogen auf das Display, wie beim Vorwärtsfahren durchgeführt werden. Dazu führt die Bildverarbeitungseinheit eine Achsenspiegelung des von der Rückwärtskamera aufgenommenen Bildes an einer senkrechten Achse durch.

Die Automatisierung der Lenk- und Fahreingriffe während der einer rückwärts gefahrenen Strecke folgenden vorwärts gefahrenen Strecke kann dadurch vervollkommnet werden, daß das System eine Vorwärtskamera vorsieht, wobei das Regel/Steuergerät mit der Bildauswertungseinheit die Hindernisse in der Vorwärts-Fahrspur abhängig von den von der Vorwärtskamera gelieferten Bildsignalen erkennt und beim Auftauchen eines Hindernisses während der automatisierten Vorwärtsfahrt ein entsprechendes akustisches und/oder optisches Warnsignal für den Fahrer erzeugt und gegebenenfalls das Fahrzeug anhält.

Damit sichergestellt ist, daß das automatische Lenksystem nur bei bestimmten Fahrzuständen aktiviert wird, kann das Regel/Steuergerät funktionell mit einem übergeordneten Fahrzeugrechner verbunden ist und von diesem Informationssignale bezüglich bestimmter Fahrzustände empfangen.

Damit können bei einer automatisierten Vorwärts- und Rückwärtsfahrt über eine bestimmte Strecke die gelernten oder gespeicherten kurzen Lenk- und Fahrprogramme bei niedriger Geschwindigkeit autonom ausgeführt werden. Somit kann das System erfindungsgemäß das Rückwärtsfahren wie auch das Vorwärtsfahren über eine bestimmte Strecke durch selbsttätige Bewegung der Lenkung und automatische Erzeugung der Fahrparameter des Kraftfahrzeugs automatisieren. Der Fahrer greift nur bei kritischen Situationen in die Lenkung, das Gas- oder Bremspedal, die Kupplung oder den Getriebeschalter ein.

Deshalb eignet sich das erfindungsgemäße automatische Lenksystem besonders für Zielgruppen mit schwierigen Hofeinfahrten oder mit körperlichen Handicaps, da es keine Kopfdrehung erforderlich macht und auch während schwieriger Fahrmanöver die Lenkbewegungen und Betätigung der Pedale und des Getriebeschalters des Fahrers, abgesehen von kritischen Situationen, überflüssig macht. Dabei ist das Gefahrenpotential wegen der geringen Geschwindigkeiten sehr klein.

Weitere Merkmale und Aufgaben der Erfindung werden in der nachfolgenden bevorzugte Ausführungsformen beschreibenden Beschreibung deutlich, wenn diese bezogen auf die beiliegenden Zeichnungsfiguren gelesen wird.

### Zeichnung

- Fig. 1: zeigt schematisch ein erstes grundlegendes Ausführungsbeispiel des erfindungsgemäßen Lenksystems; und
- Fig. 2: zeigt schematisch eine Weiterbildung des erfindungsgemäßen Lenksystems, die außer der Automatisierung der Lenkung auch eine Automatisierung des Fahrbetriebs über eine bestimmte Fahrtstrecke erreicht.

### Ausführungsbeispiele

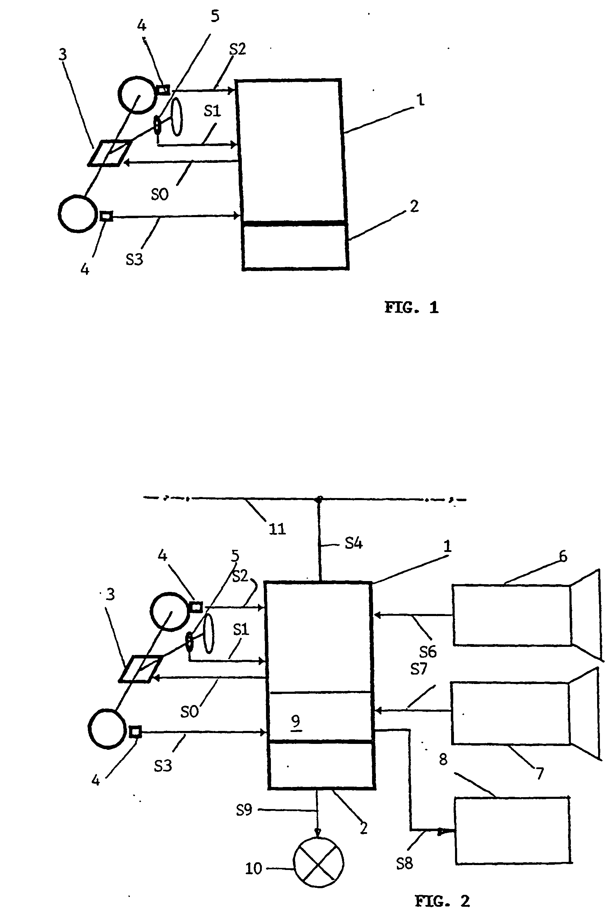

Die in Fig. 1 schematisch gezeigten Grundausbaustufe des erfindungsgemäßen automatischen Lenksystems weist ein elektronisches Regel/ Steuergerät 1 in Verbindung mit einem Speicher 2 auf. Das elektronische Regel/Steuergerät 1 empfängt von einem Lenkradwinkelsensor 5 Signale S1 über den vom Fahrer eingestellten Lenkradwinkel und von Radsensoren 4 Information über die Drehrichtung und den Drehwinkel der gelenkten Räder durch von den Radsensoren 4 gelieferte Signale S2, S3. Als Radsensoren 4 können die in einem Antiblockiersystem ohnehin vorhandenen Radsensoren dienen.

Ein elektrischer Lenksteller 3 empfängt Radlenkwinkelsignale S0 vom Regel/Steuergerät 1. Zur Automatisierung der Lenkung über eine rückwärts zu fahrende Fahrtstrecke, beispielsweise beim Rückwärtsfahren aus einer Hofeinfahrt, einem Parkplatz, einer Garage und dergleichen, speichert das Regel/Steuergerät 1 im Speicher 2 die vom Lenkradwinkelsensor 5 erfaßten Lenkbewegungen (Signale S1) einer zuletzt vorwärts gefahrenen Fahrstrecke, beispielsweise 20 m, z.B. beim Einfahren in eine Hofeinfahrt, einen Parkplatz oder eine Garage, und ebenfalls Signale S2, S3 von den Radsensoren 4. Zum automatischen Rückwärtsfahren reproduziert das Regel/Steuergerät 1 die über die zuletzt vorwärts gefahrene Fahrtstrecke gespeicherten Lenkbewegungen ortsabhängig während der unmittelbar darauffolgenden Rückwärtsfahrt und gibt die entsprechenden Lenkstellsignale S0 an den Lenksteller 3 aus.

Das Regel/Steuergerät 1 startet die automatische Ausgabe der Lenkstellsignale S0 mit Einlegen des Rückwärtsgangs. Während der Rückwärtsbewegung betätigt der Fahrer Pedale und Schaltung und kontrolliert die Rückwärtsfahrt über die Rückspiegel. Da dabei die Lenkstellsignale S0 automatisch vom Regel/ Steuergerät 1 ausgegeben werden, braucht der Fahrer nur bei kritischen Situationen in die Lenkbewegung einzugreifen und seinen Kopf nicht nach hinten zu drehen.

Eine nicht figürlich dargestellte weitere Ausbaustufe sieht eine Rückwärtskamera und eine Bildauswertungseinheit in dem oder in Verbindung mit dem Regel/Steuergerät 1 vor, so daß das System mit Hilfe einer Bildauswertung der von der Rückwärtskamera gelieferten Bilder selbständig Hindernisse und die Fahrspur erkennen kann und ggf. beim Auftauchen von Hindernissen in der rückwärts gefahrenen Fahrspur eine Warnung an den Fahrer und andere Fahrzeugsystem ausgeben kann. Bei zusätzlicher (in Fig. 1 ebenfalls nicht gezeigter) Ausrüstung mit einem Display im Armaturenbrett läßt sich durch eine Bildverarbeitung das Bild am Display so darstellen, daß die evtl. dennoch erforderlichen Lenkeingriffe des Fahrers bezogen auf das Display wie bei Vorwärtsfahrt durchgeführt werden, also nicht seitenvertauscht, wie beim normalen Rückwärtsfahren.

Fig. 2 zeigt, ausgehend von der in Fig. 1 gezeigten Grundausbaustufe des Systems eine vorteilhafte Weiterbildung. Das System ist durch eine Vorwärtskamera 6 und eine Rückwärtskamera 7 sowie ein Display 8 erweitert. Die Vorwärtskamera 6 liefert Bildsignale S6 einer vorderen Fahrtstrecke und die Rückwärtskamera 7 Bildsignale S7 einer rückwärtigen Fahrtstrecke an das Regel/Steuergerät 1. Die von diesen Bildsignalen S6, S7 dargestellten Bilder können am Display 8 angezeigt werden, und zwar, wie schon erwähnt, das von der Rückwärtskamera 7 bei Rückwärtsfahrt aufgenommene Bild gespiegelt. Das Display 8 erhält von dem Regel/Steuergerät 1 die entsprechenden Anzeigesignale S8.

Das Regel/Steuergerät 1 beinhaltet eine Bildverarbeitungs- und -auswertungseinheit 9, die zum einen die erwähnte Achsenspiegelung des von der Rückwärtskamera 7 aufgenommenen Bildes und zum anderen die Bildauswertung zur Erkennung von Hindernissen auf der jeweiligen Fahrtstrecke ausführt. Beim Auftreten eines Hindernisses erzeugt das Regel/Steuergerät 1 Alarmsignale S9, die an ein geeignetes Ausgabemedium, insbesondere eine akustische und/oder optische Anzeige 10 geführt und/oder zum Anhalten des Fahrzeugs verwendet werden.

Weiterhin ist das Regel/Steuergerät 1 über ein Leitungssystem 11, z.B. einen Bus mit einem (nicht gezeigten) übergeordneten Fahrzeugrechner und weiteren Systemen im Fahrzeug verbunden, wie z.B. mit einer Motorsteuerung, Bremsensteuerung, Getriebesteuerung usw.. Von dem übergeordneten Fahrzeugrechner kann das Regel/Steuergerät 1 Informationssignale S4 über bestimmte Fahrzustände empfangen, um das automatische Lenksystem bzw. die automatisierte Vorwärts- bzw. Rückwärtsfahrt nur bei bestimmten Fahrzuständen zu aktivieren.

Von den anderen über das Leitungssystem 11 verbundenen Fahrzeugsystemen kann das Regel/Steuergerät 1 Fahrparameter, wie Geschwindigkeit, Bremszustand, Getriebezustand, während der zuletzt gefahrenen Fahrtstrecke (z.B. 20 m) empfangen und in dem Speicher 2 speichern. Zur Automatisierung der Fahrt über eine bestimmte Vorwärts- oder Rückwärtsfahrtstrecke und der Lenkung derselben liest das Regel/Steuergerät 1 die gespeicherten Fahrparameter zusammen mit den gespeicherten Lenkbewegungen aus dem Speicher während einer unmittelbar darauffolgenden Fahrtstrecke in der umgekehrten Fahrtrichtung aus und erzeugt Stellsignale S0 für den Lenksteller 3 und die Stellglieder der Motorsteuerung, der Bremsensteuerung und der Getriebesteuerung, die sie über das Leitungssystem 11 ausgibt.

Das in Fig. 2 gezeigte automatische Lenksystem kann allgemein gespeicherte Fahrmanöver automatisch ausführen, wie z.B.:
- die Einfahrt in eine Garage;
- die Ausfahrt aus einer Garage;
- Ein- und Ausfahrt in und aus einer Garage;
- Ein- und Ausfahrt in und aus Parklücken;
- Ein- und Ausfahrt in und aus unübersichtlichen Hofeinfahrten usw..

Dem Fachmann wird deutlich, daß das in Fig. 2 gezeigte automatisierte Lenksystem bei einer automatisierten Fahrt in Vorwärts- und/oder Rückwärtsrichtung prinzipiell keine Eingriffe des Fahrers in Lenkung, Gas-, Brems- oder Kupplungspedal und Getriebeschalter mehr benötigt. Nur noch bei kritischen Situationen greift der Fahrer in die Lenkung ein bzw. betätigt die Pedale und den Getriebeschalter. Beim Auftauchen von Hindernissen oder dem Verlassen der Fahrspur kann das System selbsttätig anhalten.

Das Lenksystem der Fig. 1 oder der Fig. 2 kann wie folgt ergänzt werden:

Mit Eingabe einer Kennzeichnung im Fahrzeugstillstand und dem anschießenden Losfahren bzw. dem Drücken einer Start-Taste wird mit dem Speichern eines Fahrmanövers begonnen und nach dem Anhalten bzw. dem Drücken einer Ende-Taste wird die Speicherung des aktuellen Fahrmanövers beendet. Die Start-Taste, die Ende-Taste und die erforderlichen Mittel zur Eingabe der Kennzeichnung sind zu diesem Zweck mit dem Regel/Steuergerät 1 der Fig. 1 bzw. der Fig. 2 verbunden.

Zum automatischen Wiederholen eines gespeicherten Fahrmanövers wird dessen Kennzeichnung eingegeben und anschließend eine Ausgabe-Taste gedrückt. Die Ausgabe-Taste ist für das Wiederabfahren eines von mehreren gespeicherten Fahrmanövers erforderlich. Sie ist zu diesem Zweck ebenfalls mit dem Regel/Steuergerät 1 verbunden.

Die alternative Verwendung der Start-Taste und der Ende-Taste für das Markieren von Beginn und Ende des zu speichernden Fahrmanövers erlaubt es, auch Fahrmanöver zu speichern, in denen ein oder mehrere Anhaltevorgänge enthalten sind. Ohne Verwendung der Start- und Ende-Tasten ist Beginn und Ende des zu speichernden Fahrmanövers durch den jeweiligen Fahrzeugstillstand am Beginn und Ende des Fahrmanövers markiert.

Aus Sicherheitsgründen soll das Fahrzeug bei Beginn und Ende eines zu speichernden Fahrmanövers im Stillstand sein. Dies kann über die bekannten Radgeschwindigkeiten von den Radsensoren 4 durch das Regel/Steuergerät 1 überprüft werden. Diese Überprüfung erfolgt bei den Lenksystemen der Figuren 1 und 2 automatisch beim Speichern der Fahrstrecke und vor dem Beginn des Wiederabfahrens der letzten Fahrstrecke, der durch Einlegen des Rückwärtsganges bzw. Drücken der Ausgabe-Taste angefordert wird.

## Patentansprüche

1. Automatisches Lenksystem für Kraftfahrzeuge mit einem elektrisch ansteuerbaren Lenksteller (3) zur Einstellung eines Radlenkwinkels der gelenkten Räder, einem Lenkradwinkelsensor (5) zur Erfassung eines Lenkradwinkels, und einem elektronischen Regel/Steuergerät (1), das mindestens mit dem Lenksteller (3) und dem Lenkradwinkelsensor (5) verbunden ist, um Stellsignale (S0) für den elektrischen Lenksteller (3) zu erzeugen, wobei das Regel/Steuergerät einen zur Speicherung der Lenkbewegung von einer zuletzt gefahrenen Fahrtstrecke vorgesehenen Speicher (2) aufweist,
**dadurch gekennzeichnet, dass**
- weiterhin Radsensoren (4) zur Erfassung von Drehrichtung und Drehwinkel der gelenkten Räder vorgesehen sind, und
- die zuletzt gefahrenen Fahrtstrecke durch die Radsensoren (4) erfasst werden und das Regel/Steuergerät (1) dazu eingerichtet ist, die über die zuletzt gefahrene Fahrtstrecke gespeicherten Lenkbewegungen während einer unmittelbar darauffolgenden Fahrt in umgekehrter Fahrtrichtung ortsabhängig zu reproduzieren und die entsprechenden Stellsignale (S0) an den Lenksteller (3) auszugeben.

2. Lenksystem nach Anspruch 1, **dadurch gekennzeichnet, daß** der Speicher (2) die Lenkbewegungen einer zuletzt vorwärts gefahrenen Fahrtstrecke speichert, und das Regel/Steuergerät (1) dazu eingerichtet ist, die Lenkbewegungen bei einer unmittelbar darauffolgenden Rückwärtsfahrt zu reproduzieren.

3. Lenksystem nach Anspruch 2, **dadurch gekennzeichnet, daß** das Regel/Steuergerät (1) die Ausgabe der die Rückwärtsfahrt bestimmenden Lenkstellsignale (S0) mit dem Einlegen eines Rückwärtsgangs startet.

4. Lenksystem nach einem der Ansprüche 1-3, **dadurch gekennzeichnet, daß** das Regel/Steuergerät (1) funktionell mit weiteren Systemen im Fahrzeug verbunden ist, wie mit einer Motorsteuerung, Bremsensteuerung, Getriebesteuerung und zur ortsabhängigen Speicherung weiterer Fahrparameter, wie Geschwindigkeit, Bremszustand, Getriebezustand während der zuletzt gefahrenen Fahrtstrecke in dem Speicher (2) sowie zur ortsabhängigen Reproduktion dieser gespeicherten Fahrparameter zusammen mit den gespeicherten Lenkbewegungen während einer unmittelbar darauffolgenden Fahrtstrecke in der umgekehrten Fahrtrichtung eingerichtet ist, und Stellsignale an den Lenksteller (3) und entsprechende Stellglieder jeweils der Motorsteuerung, der Bremsensteuerung und Getriebesteuerung ausgibt.

5. Lenksystem nach einem der Ansprüche 1-4, **dadurch gekennzeichnet, daß** weiterhin eine Rückwärtskamera (7) und ein Display (8) vorgesehen sind, und das Regel/Steuergerät (1) eine Bildauswertungseinheit (9) aufweist, die Hindernisse in der rückwärtigen Fahrspur abhängig von von der Rückwärtskamera (7) gelieferten Bildsignalen (S7) erkennt, wobei das Regel/Steuergerät (1) beim Auftauchen eines Hindernisses während der Rückwärtsfahrt ein entsprechendes akustisches und/oder optisches Warnsignal (S8, S9) für den Fahrer erzeugt.

6. Lenksystem nach einem der Ansprüche 1-5, **dadurch gekennzeichnet, daß** weiterhin eine Vorwärtskamera (6) vorgesehen ist, und das Regel/ Steuergerät (1) eine Bildauswertungseinheit (9) aufweist, die Hindernisse in der Vorwärts-Fahrspur abhängig von von der Vorwärtskamera (6) gelieferten Bildsignalen (S6) erkennt, wobei das Regel/Steuergerät (1) beim Auftauchen eines Hindernisses während der Vorwärtsfahrt ein entsprechendes akustisches und/oder optisches Warnsignal (S8, S9) für den Fahrer erzeugt.

7. Lenksystem nach einem vorangehenden der Ansprüche, **dadurch gekennzeichnet, daß** das Regel/Steuergerät (1) funktionell mit einem übergeordneten Fahrzeugrechner verbunden ist und von diesem Informationssignale (S4) bezüglich bestimmter Fahrzustände empfängt, um das automatische Lenksystem nur bei bestimmten Fahrzuständen zu aktivieren.

8. Lenksystem nach einem der vorhergehenden Ansprüche, **dadurch gekennzeichnet, daß** ein oder mehrere Fahrmanöver unter einer Kennzeichnung abgespeichert werden und mittels einer Ausgabe-Taste oder dergleichen aufgerufen und/oder abgefahren werden.

9. Lenksystem nach Anspruch 8, **dadurch gekennzeichnet, daß** das oder die Fahrmanöver mit einer Start-Taste und einer Ende-Taste eingegeben werden.

10. Lenksystem nach Anspruch 8 oder 9, **dadurch gekennzeichnet, daß** die Kennzeichnung als Nummer oder dergleichen durch entsprechende Mittel eingegeben wird.

## Claims

1. Automatic steering system for motor vehicles having an electrically actuated steering actuator (3) for setting a wheel steering angle of the steered wheels, a steering wheel angle sensor (5) for sensing a steering wheel angle, and an electronic closed-loop/open-loop control device (1) which is connected at least to the steering actuator (3) and the steering wheel angle sensor (5) in order to generate actuation signals (S0) for the electric steering actuator (3), wherein the closed-loop/open-loop control device has a memory (2) which is provided for storing the steering movement of a route travelled on last, **characterized in that**
- in addition wheel sensors (4) are provided for sensing the direction of rotation and angle of rotation of the steered wheels, and
- the routes travelled on last are sensed by the wheel sensors (4) and the closed-loop/open-loop control device (1) is configured to reproduce the steering movements stored in relation to the route travelled on last during an immediately subsequent journey in the reverse direction of travel as a function of locations and to output the corresponding actuation signals (S0) to the steering actuator (3).

2. Steering system according to Claim 1, **characterized in that** the memory (2) stores the steering movements of a route travelled on last in the forward direction, and the closed-loop/open-loop control device (1) is configured to reproduce the steering movements during an immediately subsequent reverse journey.

3. Steering system according to Claim 2, **characterized in that** when a reverse gear is engaged the closed-loop/open-loop control device (1) starts outputting the steering actuation signals (S0) which determine the reverse journey.

4. Steering system according to one of Claims 1 to 3, **characterized in that** the closed-loop/open-loop control device (1) is functionally connected to further systems in the vehicle such as to an engine control device, brake control device, gearbox control device and is configured for the location-dependent storage of further travel parameters such as velocity, state of the brakes, state of the gearbox during the route last travelled on in the memory (2) and for the location-dependent reproduction of these stored travel parameters together with the stored steering movements during an immediately subsequent route in the opposite direction of travel, and outputs actuation signals to the steering actuator (3) and corresponding actuating elements to the engine control device, the brake control device and gearbox control device, respectively.

5. Steering system according to one of Claims 1 to 4, **characterized in that** in addition a reverse travel camera (7) and a display (8) are provided, and the closed-loop/open-loop control device (1) has an image-evaluation unit (9) which detects obstacles on the reversing course as a function of image signals (S7) which are supplied by the reverse travel camera (7), wherein the closed-loop/open-loop control device (1) generates a corresponding acoustic and/or visual warning signal (S8, S9) for the driver if an obstacle appears during the reverse journey.

6. Steering system according to one of Claims 1 to 5, **characterized in that** in addition a forward travel camera (6) is provided and the closed-loop/open-loop control device (1) has an image-evaluation device (9) which detects obstacles in the forward travel course as a function of image signals (S6) which are supplied by the forward travel camera (6), wherein the closed-loop/open-loop control device (1) generates a corresponding acoustic and/or visual warning signal (S8, S9) for the driver if an obstacle appears during the forward travel.

7. Steering system according to one of the preceding claims, **characterized in that** the closed-loop/open-loop control device (1) is functionally connected to a superordinate vehicle computer and receives information signals (S4) relating to specific travel states from said vehicle computer, in order to activate the automatic steering system only in specific travel states.

8. Steering system according to one of the preceding claims, **characterized in that** one or more travel manoeuvres are stored under an identifier and are called and/or cancelled by means of an output key or the like.

9. Steering system according to Claim 8, **characterized in that** the travel manoeuvre or manoeuvres are input with a start key and an end key.

10. Steering system according to Claim 8 or 9, **characterized in that** the identifier is input as a number or the like using corresponding means.

## Revendications

1. Système de direction automatique pour des véhicules automobiles, comportant un actionneur de direction (3) à commande électrique et destiné à régler un angle de braquage des roues motrices, un capteur d'angle de volant (5) pour détecter l'angle du volant et un appareil de réglage ou de commande (1) électronique relié au moins à l'actionneur de direction (3) et au capteur d'angle de volant (5) afin de produire des signaux de réglage (S0) pour l'actionneur de direction (3) électrique, l'appareil de réglage ou de commande comportant une mémoire (2) prévue pour mémoriser le mouvement de direction sur un trajet parcouru en dernier lieu,
**caractérisé en ce que**
- des capteurs de roue (4) sont en outre prévus pour détecter le sens de rotation et l'angle de rotation des roues motrices, et
- le dernier trajet parcouru est détecté par les capteurs de roue (4) et l'appareil de réglage ou de commande (1) est conçu pour reproduire en fonction du lieu les mouvements de direction mémorisés sur le dernier trajet parcouru pendant un trajet qui suit immédiatement en sens contraire et pour envoyer à l'actionneur de direction (3) les signaux de réglage (S0) correspondants.

2. Système de direction selon la revendication 1,
**caractérisé en ce que**
la mémoire (3) enregistre les mouvements de direction sur un trajet parcouru vers l'avant en dernier lieu et l'appareil de réglage ou de commande (1) est conçu pour reproduire les mouvements de direction lorsqu'une marche arrière suit immédiatement.

3. Système de direction selon la revendication 2,
**caractérisé en ce que**
l'appareil de réglage ou de commande (1) commence à envoyer les signaux de réglage de direction (S0) qui déterminent la marche arrière quand on passe une marche arrière.

4. Système de direction selon l'une des revendications 1 à 3,
**caractérisé en ce que**
l'appareil de réglage ou de commande (1) est fonctionnellement lié à d'autres systèmes du véhicule, comme une commande de moteur, une commande de freins, une commande de boîte de vitesses, et il est conçu pour enregistrer dans la mémoire 2 en fonction du lieu d'autres paramètres de conduite, comme la vitesse, l'état de freinage, l'état de la boîte de vitesses pendant le dernier trajet parcouru, ainsi que pour reproduire ces paramètres de conduite mémorisés en fonction du lieu conjointement avec les mouvements de direction mémorisés pendant un trajet en sens inverse parcouru immédiatement après et il envoie respectivement des signaux de réglage à l'actionneur de direction (3) et à des organes de réglage correspondants de la commande de moteur, de la commande de freins et de la commande de boîte de vitesses respectivement.

5. Système de direction selon l'une des revendications 1 à 4,
**caractérisé en ce qu'**
on prévoit en outre une caméra arrière (7) et un affichage (8) et l'appareil de réglage ou de commande (1) comporte une unité d'exploitation d'images (9) qui identifie les obstacles sur la trajectoire arrière en fonction des signaux d'image (S7) fournis par la caméra arrière (7), l'appareil de réglage ou de commande (1) produisant à l'intention du conducteur un signal d'avertissement (S8, S9) acoustique et/ou optique correspondant pendant la marche arrière.

6. Système de direction selon l'une des revendications 1 à 5,
**caractérisé en ce qu'**
on prévoit en outre une caméra avant (6) et l'appareil de réglage ou de commande (1) comporte une unité d'exploitation d'images (9) qui identifie les obstacles sur la trajectoire avant en fonction des signaux d'image (S6) fournis par la caméra avant (6), l'appareil de réglage ou de commande (1) produisant à l'intention du conducteur un signal d'avertissement (S8, S9) acoustique et/ou optique correspondant pendant la marche avant.

7. Système de direction selon l'une des revendications précédentes,
**caractérisé en ce que**
l'appareil de réglage ou de commande (1) est fonctionnellement lié à un ordinateur de bord hiérarchiquement supérieur et reçoit de celui-ci des signaux d'informations (S4) concernant certains états de conduite pour activer le système de direction automatique uniquement dans certains états de conduite.

8. Système de direction selon l'une des revendications précédentes,
**caractérisé en ce qu'**
une ou plusieurs manoeuvres de conduite sont enregistrées sous une identification et sont demandées et/ou bloquées à l'aide d'une touche de sortie ou d'un élément comparable.

9. Système de direction selon la revendication 8,
**caractérisé en ce que**
la ou les manoeuvres de conduite sont saisies à l'aide d'une touche de début et d'une touche de fin.

10. Système de direction selon la revendication 8 ou 9,
**caractérisé en ce que**
l'identification est saisie sous forme de numéro ou d'un élément comparable par des moyens correspondants.
